# EUROPÄISCHE PATENTSCHRIFT

(11) **EP 3 209 992 B1**
(45) Veröffentlichungstag und Bekanntmachung des Hinweises auf die Patenterteilung: **03.07.2019**
(21) Anmeldenummer: 15770802.5
(22) Anmeldetag: 25.09.2015
(51) Int. Cl.: B60C 11/00, G01M 11/06, B60Q 11/00, F21S 41/16, G01J 1/42, G01J 1/16, G01N 21/93

(54) **VERFAHREN ZUM PRÜFEN DER FUNKTIONSFÄHIGKEIT EINES SCHEINWERFERS EINES KRAFTFAHRZEUGS UND KRAFTFAHRZEUG MIT EINER OPTISCHEN ERFASSUNGSEINRICHTUNG UND MIT EINEM SCHEINWERFER**
METHOD FOR CHECKING THE FUNCTIONALITY OF THE HEADLAMP OF A MOTOR VEHICLE, AND MOTOR VEHICLE
PROCÉDÉ POUR TESTER LE FONCTIONNEMENT DES LAMPES D'UN VÉHICULE AUTOMOBILE ET VÉHICULE AUTOMOBILE

(30) Priorität: 24.10.2014 DE 102014015796
(43) Veröffentlichungstag der Anmeldung: 30.08.2017
(73) Patentinhaber: Audi AG, 85045 Ingolstadt (DE)
(72) Erfinder: GUT, Carsten, 85051 Ingolstadt (DE)
(74) Vertreter: Thielmann, Frank
(86) Internationale Anmeldenummer: PCT/EP2015/001904
(87) Internationale Veröffentlichungsnummer: WO 2016/062366

(56) Entgegenhaltungen:
- DE-A1-102013 201 382
- JP-A- 2011 157 022
- US-A1- 2011 249 460
- US-A1- 2013 265 561
- US-A1- 2014 003 070
- US-A1- 2014 254 188

## Beschreibung

Die Erfindung betrifft ein Verfahren zum Prüfen der Funktionsfähigkeit eines Scheinwerfers eines Kraftfahrzeugs gemäß dem Oberbegriff des Patentanspruchs 1. Des Weiteren betrifft die Erfindung ein Kraftfahrzeug gemäß dem Oberbegriff des Patentanspruchs 11.

Bei Scheinwerfern für Kraftfahrzeuge kann als Lichtquelle ein Laser verwendet werden. Mittels dieses Lasers kann ein Konverter zum Abgeben von konvertiertem Licht angeregt werden. Ein solcher Konverter kann beispielsweise ein Kristallelement aus Ce:YAG umfassen, eine besondere Form von Yttrium-Aluminium-Granat. Der Laser wird üblicherweise dazu genutzt, Licht mit einer besonders hohen Lichtintensität in einem besonders schmalen Wellenlängenbereich zu erzeugen. Der Konverter gibt dagegen bei Anregung Licht in einem anderen, insbesondere breiten Wellenlängenbereich ab, das heißt er konvertiert das vom Laser erzeugte Licht. So lässt sich insbesondere weißes Licht mit beispielsweise einer Temperatur von 5.500 Kelvin erzeugen, welches von allen Verkehrsteilnehmern als besonders angenehm empfunden wird.

Das von dem Konverter abgegebene Licht wird vom Scheinwerfer zum Erzeugen einer vorgebbaren Lichtverteilung auf einer Fläche in einem Umgebungsbereich des Kraftfahrzeugs abgestrahlt. Die vorgebbare Lichtverteilung ist dabei durch eine Steuereinrichtung des Scheinwerfers einstellbar, beispielsweise mittels eines verschwenkbaren Mikrospiegels oder eines Spiegelarrays, welches auch als Digital Micromirror Device bezeichnet wird. Das Kraftfahrzeug kann auch eine optische Erfassungseinrichtung umfassen, mittels welcher beispielsweise andere Verkehrsteilnehmer erfasst werden können. Die Lichtverteilung ist dann beispielsweise in Abhängigkeit von diesen anderen erfassten Verkehrsteilnehmern einstellbar, sodass diese vorzugsweise durch die Lichtverteilung nicht geblendet werden.

Generell kann der Konverter eines Scheinwerfers eines Kraftfahrzeugs mit einem Laser als Lichtquelle durch mechanische Krafteinwirkung und Alterungsprozesse beschädigt werden, sodass die Funktionsfähigkeit des Scheinwerfers und damit auch des Kraftfahrzeugs beeinträchtigt ist. Durch Beschädigungen kann es insbesondere zu Augenirritationen und Blendungen bei anderen Verkehrsteilnehmern kommen.

Aus der US 2003/0183784 A1 ist ein Peilsystem mit Laser und Konverter für einen Infrarotsensor bekannt. Bei einer korrekten Ausrichtung wird hier der Konverter zum Leuchten in einem bestimmten Muster angeregt, sodass erkennbar ist, dass der Infrarotsensor korrekt ausgerichtet ist.

US 2014/254188 A1 beschreibt einen Kraftfahrzeugscheinwerfer, bei dem weißes Laserlicht durch die Kombination eines roten, eines grünen und eines blauen Lasers erzeugt wird. Gemäß der D1 wird dieses weiße Laserlicht von dem Scheinwerfer abgestrahlt, um eine vorgebbare Lichtverteilung zu erzeugen.

US 2013/265561 A1 beschreibt einen adaptiven Matrixscheinwerfer mit einem Konverter, bei dem die jeweiligen Lichtquellen durch Laserelemente gebildet werden.

US 2011/249460 A1 beschreibt einen Scheinwerfer mit einer adaptiven Lichtverteilung mittels einer Vielzahl von Mikrospiegelelementen und einer LED als Lichtquelle.

US 2014/003070 A1 beschreibt ebenfalls einen adaptiven Kraftfahrzeugscheinwerfer, durch den die Umgebung auf Objekte, wie z.B. entgegenkommende Fahrzeuge oder Fußgänger erfasst werden.

JP 2011 157022 A beschreibt einen Kraftfahrzeugscheinwerfer in einer besonders kleinen Bauweise mit variabel einstellbarer Lichtverteilung.

DE 10 2013 201382 A1 beschreibt ein Verfahren zum Einstellen eines Kraftfahrzeugscheinwerfers, um die Lichtblendungen von anderen Verkehrsteilnehmern zu reduzieren.

Aufgabe der vorliegenden Erfindung ist es, ein Verfahren zum Prüfen der Funktionsfähigkeit eines Scheinwerfers eines Kraftfahrzeugs bereitzustellen. Weiterhin ist es Aufgabe der Erfindung, ein Kraftfahrzeug zu schaffen, mittels welchem solch ein Verfahren durchführbar ist.

Diese Aufgabe wird erfindungsgemäß durch ein Verfahren und ein Kraftfahrzeug mit den Merkmalen der unabhängigen Patentansprüche 1 und 11 gelöst. Vorteilhafte Ausgestaltungen mit zweckmäßigen Weiterbildungen der Erfindung sind in den übrigen Patentansprüchen angegeben.

Das Kraftfahrzeug weist dafür einen Scheinwerfer auf, welcher das von dem Konverter abgegebene Licht zum Erzeugen einer vorgebbaren Lichtverteilung auf einer Fläche in einem Umgebungsbereich des Kraftfahrzeugs abstrahlt. Die vorgebbare Lichtverteilung ist dabei durch eine Steuereinrichtung des Scheinwerfers einstellbar, beispielsweise mittels eines verschwenkbaren Mikrospiegels oder eines Spiegelarrays, welches auch als Digital Micromirror Device (DMD) bezeichnet wird. Das Kraftfahrzeug kann auch eine optische Erfassungseinrichtung umfassen, mittels welcher beispielsweise andere Verkehrsteilnehmer erfasst werden können. Die Lichtverteilung ist dann beispielsweise in Abhängigkeit von diesen anderen erfassten Verkehrsteilnehmern einstellbar, sodass diese vorzugsweise durch die Lichtverteilung nicht geblendet werden.

Das erfindungsgemäße Verfahren nach Anspruch 1 zum Prüfen der Funktionsfähigkeit eines Kraftfahrzeugs kennzeichnet sich durch folgende Schritte:
- Durch die Steuereinrichtung wird als Lichtverteilung ein Testmuster eingestellt;
- mittels der optischen Erfassungseinrichtung wird das Testmuster auf der Fläche erfasst;
- durch eine Auswerteinrichtung des Kraftfahrzeugs wird das erfasste Testmuster mit einem vorbestimmten Referenzmuster verglichen, wobei
- das Referenzmuster durch einen unbeschädigten oder beschädigten Scheinwerfer erzeugtes Testmuster nachbildet und dass mittels der Auswerteinrichtung das Testmuster mit dem Referenzmuster anhand wenigstens einer der folgenden Eigenschaften verglichen wird, um eine Alterung und/oder einen Riss des Konverters zu erfassen: einer Helligkeit, einer Farbe.

Damit kann die tatsächliche Lichtverteilung des Scheinwerfers mit einer erwarteten Lichtverteilung verglichen werden, um so Beschädigungen des Konverters feststellen zu können.

Das Testmuster kann im einfachsten Fall das An- und Ausschalten der Lichtverteilung umfassen, komplexere Testmuster können jeweils eine bestimmte Hell-Dunkel-Grenzen aufweisen, verschiedene Farben und Farbverläufe, unterschiedliche Helligkeiten, unterschiedliche Lagen auf der Fläche, Formen von Bereichen bestimmter Helligkeit. Das Referenzmuster kann ein Testbild einer durch einen unbeschädigten Scheinwerfer erzeugten Lichtverteilung nachbilden. Alternativ kann das Referenzmuster auch eine Lichtverteilung eines Scheinwerfers mit beschädigtem Konverter nachbilden, sodass durch einen Vergleich auch spezifische Fehlerquellen oder Defekte direkt identifizierbar sind. Bei einem Scheinwerfer mit mehreren Konvertern kann eine Beschädigung auch dem jeweiligen Konverter zugeordnet werden.

Die optische Erfassungseinrichtung ist üblicherweise bei Kraftfahrzeugen mit einem Scheinwerfer mit einstellbarer Lichtverteilung bereits verbaut, sodass keine zusätzliche Erfassungseinrichtung notwendig ist. Somit kann durch das Verfahren die Funktionsfähigkeit eines Scheinwerfers eines Kraftfahrzeugs besonders einfach und kostengünstig überprüft werden, insbesondere durch das Kraftfahrzeug selbst und ohne weitere externe Vorrichtungen.

Beschädigungen und/oder Fehlfunktionen des Konverters können außerdem von Beschädigungen und/oder Fehlfunktionen von anderen Bauteilen des Scheinwerfers durch weitere in dem Scheinwerfer oder dem Kraftfahrzeug verbaute Sensoren unterschieden werden. Beispielsweise kann eine Fehlfunktion des Lasers durch eine Leuchtstärkenüberwachung mittels einer Fotodiode erfasst werden, die Steuereinrichtung kann durch eine Spannungs-überwachung überwacht werden, und/oder eine eventuelle Überhitzung des Scheinwerfers kann mittels eines Temperatursensors erfasst werden.

In weiterer vorteilhafter Ausgestaltung der Erfindung ist es vorgesehen, dass mittels der Auswerteeinrichtung das Testmuster mit dem Referenzmuster anhand wenigstens einer der folgenden Eigenschaften verglichen wird: einer Hell-Dunkel-Grenze, einer Lage, einer Helligkeit, einer Form und einer Farbe. Damit können auch örtliche oder spektrale Verschiebungen, geometrische Verzerrungen und Farbverläufe der Lichtverteilung geprüft werden. Anhand der Hell-Dunkel-Grenze kann insbesondere die Region des Konverters identifiziert werden, welche beschädigt ist. Anhand der Lage der Lichtverteilung kann eine unerwünschte örtliche Verschiebung des Konverters im Scheinwerfer detektiert werden, welche ebenfalls als Beschädigung gilt. Anhand der Helligkeit lässt sich eine Alterung insbesondere in Form einer Verdunkelung des Konverters detektieren, anhand der Form können insbesondere mechanische Fehler wie abgebrochene Seiten des Konverters lokalisiert werden. Anhand der Farbe können Alterungsprozesse mit einer Verfärbung des Konverters und/oder einer Veränderung einer erwarteten Konvertierung des Lichts besonders gut erfasst werden. Auch Risse in dem Kristall eines Konverters können so erfasst werden.

Besonders vorteilhaft für das Verfahren ist es, wenn von dem Kraftfahrzeug das Referenzmuster selbst erzeugt wird, indem eine weitere Lichtverteilung eingestellt, erfasst und als das Referenzmuster gespeichert wird. Dadurch kann insbesondere eine Symmetrie geprüft werden. Außerdem ist es so beispielsweise möglich, einen ersten Scheinwerfer mit einem zweiten Scheinwerfer des Kraftfahrzeugs zu vergleichen, um so besonders einfach die Funktionsfähigkeit zu prüfen. Außerdem kann danach zumindest ein weiteres fehlerspezifisches Testmuster erzeugt werden, um Fehlerquellen einem bestimmten Bereich des Konverters zuordnen zu können. Zusätzlich kann ein Einfluss durch den Umgebungsbereich mit seiner Fläche auf das Ergebnis der Prüfung der Funktionsfähigkeit eines Scheinwerfers des Kraftfahrzeugs reduziert werden (Biaskompensation).

Besonders vorteilhaft ist es, wenn das Testmuster für eine vorbestimmte Zeitdauer eingestellt wird, welche unterhalb einer Zeitdauer liegt, ab welcher das Testmuster für einen Menschen optisch wahrnehmbar ist. Eine solche Zeitdauer ist beispielsweise kleiner als oder gleich einer 1/20 Sekunde, insbesondere kleiner als oder gleich einer 1/30, 1/40, 1/50, 1/60, 1/70, 1/80, 1/90 oder einer 1/100 Sekunde. Dadurch ist es möglich, die Funktionsfähigkeit eines Scheinwerfers des Kraftfahrzeugs während der Fahrt ohne eine Störung des Fahrers und/oder anderer Verkehrsteilnehmer durchzuführen. Es kann also ein sogenanntes Online-Prüfen der Funktionsfähigkeit des Kraftfahrzeugs während der Fahrt stattfinden. Damit ist ein regelmäßiges Prüfen beispielsweise mit einer Wiederholungsfrequenz in einem Bereich von 1 Minute bis 300 Minuten möglich, sodass Fehler des Konverters besonders zeitnah erfasst werden können.

Weiterhin vorteilhaft ist es, wenn das Testmuster für eine Zeitdauer eingestellt wird, welche abhängig von einem Vergleichsergebnis eines vorherigen Vergleichs eines erfassten Testmusters mit einem Referenzmuster ist. Damit kann also beispielsweise die Zeitdauer, für welche das Testmuster eingestellt wird, von einer vorherigen Prüfung der Funktionsfähigkeit eines Scheinwerfers des Kraftfahrzeugs abhängig gemacht werden. Dadurch ist es möglich, bei der Detektion eines Fehlers in einer vorangegangenen Prüfung eine erneute Prüfung mit einem größeren und/oder andere Testmuster durchzuführen. Das größeren und/oder andere Testmuster kann beispielsweise eines der bereits vorher beschriebenen komplexeren Testmuster sein. Damit ist eine besonders einfache und genaue Validierung eines Prüfergebnisses möglich. Mittels des mit dieser längeren Zeitdauer eingeblendeten Testmusters lassen sich auch schon kleine Defekte und Fehlerquellen identifizieren und/oder ortsgenau einem Bereich des Konverters zuordnen.

In einer weiteren besonders vorteilhaften Ausgestaltung des Verfahrens ist es vorgesehen, dass eine Beschaffenheit, insbesondere eine Geometrie und/oder Reflexionseigenschaft der durch die Lichtverteilung beleuchteten Fläche, mittels der Erfassungseinrichtung und/oder einer weiteren Sensoreinrichtung erkannt wird und das Testmuster in Abhängigkeit von dieser erkannten Beschaffenheit mit dem Referenzmuster verglichen wird. Dadurch kann eine Verfälschung des Testergebnisses durch die Beschaffenheit der Fläche verhindert werden. Beispielsweise können Unebenheiten in einer Straße oder Verzerrungen durch Gebüsche herausgefiltert werden. Für die Erfindung sind im Stand der Technik Bilderkennungsalgorithmen verfügbar. Alternativ ist es so auch möglich, die Lichtverteilung des Testmusters bereits in Abhängigkeit von der Beschaffenheit der durch die Lichtverteilung beleuchteten Fläche so anzupassen, dass diese Beschaffenheit mit berücksichtigt wird und keinen oder einen besonders geringen Einfluss auf das projizierte Testmuster hat. Alternativ oder zusätzlich kann zudem vorgesehen werden, dass das Testmuster nur eingestellt wird, wenn die Fläche beispielsweise eben genug ist und damit Wahrscheinlichkeit eines falsches Prüfergebnis besonders gering ist.

Als weitere Sensoreinrichtung kann beispielsweise ein im Kraftfahrzeug vorhandenes Radar oder ein Ultraschallsensor dienen. Auch eine Kopplung beispielsweise mit GPS-Koordinaten ist möglich, um eine Prüfung immer annähernd an der gleichen Stelle durchzuführen. Dadurch kann beispielsweise davon ausgegangen werden, dass die beleuchtete Fläche immer annähernd dieselbe Beschaffenheit aufweist. Dies könnte beispielsweise die Straße vor dem Haus des Besitzers des Kraftfahrzeugs sein. Auch eine Kopplung mit einer Routenplanung eines Navigationsgeräts ist möglich. Dadurch kann immer eine Prüfung vor dem Start einer Fahrt und/oder bei Ankunft erfolgen. Alternativ ist es sonst auch möglich, das Verfahren vor einer Prüfwand durchzuführen, um Einflüsse durch die Beschaffenheit der beleuchteten Fläche auf das Prüfergebnis zu vermeiden.

In besonders vorteilhafter Ausgestaltung der Erfindung ist es vorgesehen, dass der Scheinwerfer in Abhängigkeit von einem Ergebnis des Vergleichs des Testmusters mit dem Referenzmuster kalibriert wird. Bei dieser Kalibrierung kann es sich um eine Ausrichtung des Scheinwerfers zu einer Achse des Kraftfahrzeugs handeln. Besonders vorteilhaft ist es jedoch, wenn die Lichtverteilung nach der Prüfung der Funktionsfähigkeit von der Steuereinrichtung so eingestellt wird, dass das Testmuster und das Referenzmuster nur noch besonders wenig voneinander abweichen um den Scheinwerfer zu kalibrieren. Damit können Beschädigungen des Scheinwerfers und insbesondere des Konverters wenigstens teilweise kompensiert werden, bis eine Reparatur oder ein Austausch des Scheinwerfers möglich ist. Dadurch können insbesondere Augenirritationen und Blendungen von anderen Verkehrsteilnehmern durch einen beschädigten Scheinwerfer besonders gut vermieden werden.

Weiterhin vorteilhaft ist es, wenn von der Auswerteeinrichtung eine Fehlermeldung ausgegeben wird, wenn das Testmuster von dem Referenzmuster um einen vorbestimmten Schwellenwert bei dem Vergleich abweicht. Dabei kann insbesondere eine bestimmte Eigenschaft des Testmusters und des Referenzmusters wie die Hell-Dunkel-Grenze, die Lage, die Helligkeit, die Form und die Farbe der Lichtverteilung mit einem Schwellenwert verglichen werden. Die Fehlermeldung kann an den Fahrer des Kraftfahrzeugs durch ein optisches oder akustisches Signal ausgegeben werden, alternativ oder zusätzlich kann sie in einem Speicher des Kraftfahrzeugs gespeichert werden, um sie für spätere Wartungszwecke wieder auslesen zu können. Die Fehlermeldung kann dabei weitere Informationen über die vermutete Beschädigung und/oder eine erfasste Fehlfunktion enthalten. Natürlich ist es beispielsweise auch möglich, die Fehlermeldung drahtlos an eine Werkstatt oder Wartungseinrichtung zu übertragen.

Die vorstehend im Zusammenhang mit dem erfindungsgemäßen Verfahren nach Anspruch 1 beschriebenen Vorteile und Ausgestaltungen gelten in ebensolcher Weise für das Kraftfahrzeug nach Anspruch 11, welches dazu ausgebildet ist, ein solches Verfahren durchzuführen.

In weiterer vorteilhafter Ausgestaltung des Kraftfahrzeugs ist es vorgesehen, dass die optische Erfassungseinrichtung eine Kamera und/oder eine Infrarotkamera umfasst. Eine Kamera oder Infrarotkamera ist besonders kostengünstig und üblicherweise bereits in Kraftfahrzeugen mit einstellbarer Lichtverteilung verbaut. Insbesondere können solche optischen Erfassungseinrichtungen auch noch von anderen Kraftfahrzeugsystemen, beispielsweise Fahrerassistenzsystemen, genutzt werden. Eine Kamera ermöglicht es dabei insbesondere, das Testmuster in einem Wellenlängenbereich zu erfassen, wie dies auch durch das menschliche Auge erfasst wird. Eine Infrarotkamera hat den Vorteil, dass auch Teile des Lichtspektrums beziehungsweise Wellenlängenbereiche erfasst werden können, welche von dem menschlichen Auge nicht erfasst werden. So ist es möglich, Alterungsprozesse beim Konverter besonders frühzeitig zu detektieren.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine schematische Draufsicht auf ein Kraftfahrzeug mit einem Scheinwerfer, welcher eine erste Lichtverteilung erzeugt; und
- Fig. 2: eine weitere Draufsicht auf das Kraftfahrzeug wie in Fig. 1, wobei der Scheinwerfer eine zweite Lichtverteilung erzeugt.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

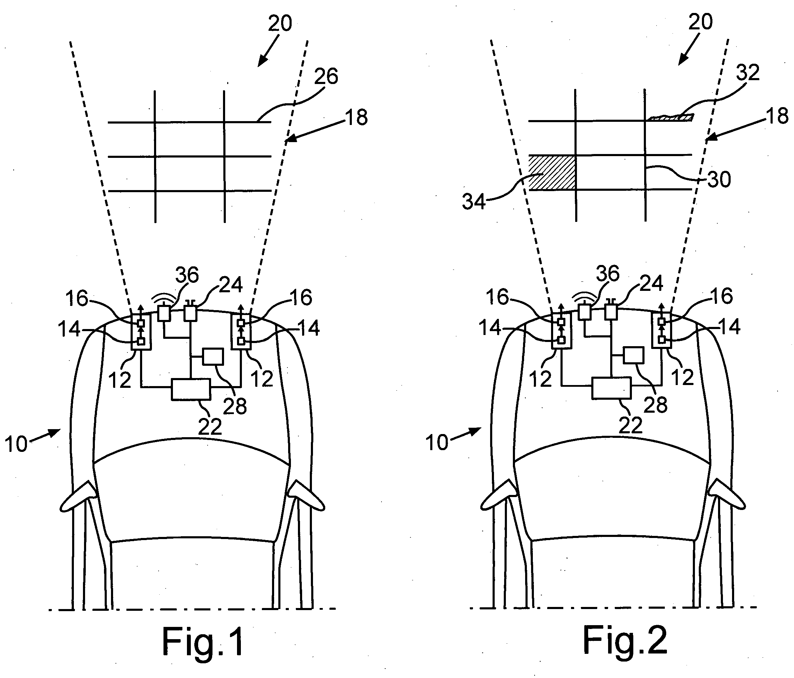

Fig. 1 und Fig. 2 zeigen in einer schematischen Draufsicht ein Kraftfahrzeug 10 mit zwei Scheinwerfern 12. Die Scheinwerfer 12 umfassen dabei einen Laser 14 zum Erzeugen von Licht, mittels welchem ein Konverter 16 zum Abgeben von konvertiertem Licht angeregt wird. Dieses vom Konverter 16 abgegebene Licht wird vom Scheinwerfer 12 zum Erzeugen einer vorgebbaren Lichtverteilung 18 auf einer Fläche 20 in einem Umgebungsbereich des Kraftfahrzeugs 10 abgestrahlt. Die Fläche 20 ist dabei beispielsweise eine Straße, es kann sich aber auch um eine Prüfwand vor dem Kraftfahrzeug 10 handeln.

Die vorgebbare Lichtverteilung 18 wird durch eine Steuereinrichtung 22 des Scheinwerfers 12 eingestellt. Im gezeigten Fall sind die beiden Scheinwerfer 12 mit einer gemeinsame Steuereinrichtung 22 verbunden, welche beispielsweise einen verstellbaren Mikrospiegel in jedem Scheinwerfer 12 steuert. Mittels des Mikrospiegels wird das Licht so aus dem Scheinwerfer 12 abgestrahlt, dass die Lichtverteilung 18 zum Beispiel zeilenweise auf der Fläche 20 aufgebaut wird. Dabei kann die Steuereinrichtung 22 die Lichtverteilung 18 auch in Abhängigkeit von weiteren, durch die optische Erfassungseinrichtung 24 erfassten Verkehrsteilnehmer einstellen.

Das Verfahren nach Anspruch 1 zum Prüfen der Funktionsfähigkeit eines Scheinwerfers eines Kraftfahrzeugs 10 mit den Scheinwerfern 12 ist durch folgende Schritte gekennzeichnet:
- Durch die Steuereinrichtung 22 wird als Lichtverteilung 18 ein Testmuster 26 eingestellt. Im in Fig. 1 gezeigten Beispiel werden dafür beispielsweise fünf linienförmige Bereiche der Lichtverteilung 18 auf der Fläche 20, also auf der Straße, beispielsweise nicht oder weniger stark beleuchtet.
- Mittels der optischen Erfassungseinrichtung 24 des Kraftfahrzeugs 10 wird das Testmuster 26 auf der Fläche 20 erfasst.
- Durch eine Auswerteeinrichtung 28 des Kraftfahrzeugs 10 wird das erfasste Testmuster 26 mit einem vorbestimmten Referenzmuster verglichen, wobei
- das Referenzmuster durch einen unbeschädigten oder beschädigten Scheinwerfer erzeugtes Testmuster nachbildet und dass mittels der Auswerteinrichtung das Testmuster mit dem Referenzmuster anhand wenigstens einer der folgenden Eigenschaften verglichen wird, um eine Alterung und/oder einen Riss des Konverters zu erfassen: einer Helligkeit, einer Farbe.

Ist der Konverter 16 beispielsweise durch mechanische Krafteinwirkung und/oder Alterungsprozesse beschädigt, so wird das erzeugte Testmuster 26 bei einem Vergleich mit dem Referenzmuster von diesem abweichen. Von der Auswerteeinrichtung 28 kann dann entsprechend eine Fehlermeldung ausgegeben werden. Beispielsweise zeigt Fig. 1 das von einem unbeschädigten Scheinwerfer 12 abgestrahlte Testmuster 26, während das Testmuster 30 der Lichtverteilung 18 in Fig. 2 durch einen beschädigten Konverter 16 erzeugt wird.

Vom Kraftfahrzeug 10 in Fahrtrichtung aus gesehen hinten rechts weist ein Teilbereich 32 der Lichtverteilung 18 von Fig. 2 im Vergleich mit Fig. 1 einen ausgeprägt deformierten breiteren, nicht ausgeleuchteten Teilbereich 32 statt eines linienförmigen Bereichs auf. Dies lässt beispielsweise auf einen gebrochenen Konverter 16 oder einen Konverter 16 mit Rissen schließen. Ein weiterer Teilbereich 34, vom Kraftfahrzeug 10 in Fahrtrichtung gesehen auf der linken Seite der Lichtverteilung 18, weist ebenfalls eine Veränderung auf. Hier ist die Lichtverteilung 18 beispielsweise weniger hell ausgeleuchtet oder weist eine andere Farbe auf. Dies lässt beispielsweise auf eine Alterung des Konverters 16 schließen, wodurch sich dieser beispielsweise verfärbt hat und/oder nicht mehr so gut zum Leuchten durch den Laser 14 anregbar ist. Der jeweilige Teilbereich 32, 34 des Testmusters 26, 30 beziehungsweise der Lichtverteilung 18 lässt sich dabei unmittelbar einem Teilbereich des Konverters 16 zuordnen. Damit kann auch die physische Position der Beschädigung, also beispielsweise der Riss und/oder die Verfärbung des Konverters 16, bestimmt werden.

Das Referenzmuster kann in der Auswerteeinrichtung 28 fest abgespeichert sein. Es kann entweder zu einem Testmuster 26 korrespondieren, welches durch einen unbeschädigten Konverter 16 erzeugt wurde, oder aber auch zu einem Testmuster 30, welches durch einen beschädigten Konverter 16 erzeugt wurde. Es können auch eine Vielzahl von unterschiedlichen Referenzmustern vorgesehen sein die mit dem Testmuster 26, 30 verglichen werden.

Das Referenzmuster kann auch von dem Kraftfahrzeug 10 selbst erzeugt werden, indem eine weitere Lichtverteilung 18 eingestellt, erfasst und gespeichert wird. Dadurch können Umwelteinflüsse auf das Ergebnis der Prüfung der Funktionsfähigkeit eines Scheinwerfers des Kraftfahrzeugs 10 besonders gut reduziert werden. Außerdem ist es so möglich, beispielsweise die beiden Scheinwerfer 12 des Kraftfahrzeugs 10 miteinander zu vergleichen. So kann besonders einfach ein Referenzmuster erzeugt werden, indem beispielsweise zuerst ein Muster durch den linken Scheinwerfer 12 des Kraftfahrzeugs 10 erzeugt wird und dann durch den rechten Scheinwerfer 12 des Kraftfahrzeugs 10. Anschließend ist nur noch ein Vergleich dieser beiden Muster miteinander nötig. Dabei wird genutzt, dass durch die beiden Scheinwerfer 12 symmetrische Lichtverteilungen erzeugt werden können.

Es kann also auch jedes Testmuster 26, 30 gleichzeitig als Referenzmuster für eine weitere Prüfung der Funktionsfähigkeit eines Scheinwerfers des Kraftfahrzeugs 10 verwendet werden. Fig. 1 kann also auch so verstanden werden, dass hier bei der Lichtverteilung 18 ein Referenzmuster gezeigt wird. Fig. 2 zeigt dann das Testmuster 30, das mit dem als Testmuster 26 ausgebildeten Referenzmuster - wie es in Fig. 1 gezeigt ist - verglichen wird. Aufgrund einer Beschädigung des Konverters 16 weicht das Testmuster 30 dabei von dem Referenzmuster, also dem Testmuster 26 ab. Das als Testmuster 26 ausgebildete Referenzmuster kann dabei von dem Kraftfahrzeug 10 selbst eingestellt, erfasst und gespeichert werden. Es kann aber auch bereits bei der Herstellung des Kraftfahrzeugs 10 in einem Speicher des Kraftfahrzeugs 10 hinterlegt werden.

Bei der Prüfung wird das Testmuster 26 und/oder 30 vorzugsweise für eine vorbestimmte Zeitdauer eingestellt und die Fläche 20 damit beleuchtet, welche unterhalb einer Zeitdauer liegt, ab welcher das Testmuster 26 und/oder 30 für einen Menschen optisch wahrnehmbar ist. Damit kann der Scheinwerfer 12 des Kraftfahrzeugs 10 online während einer Fahrt des Kraftfahrzeugs 10 periodisch geprüft werden, ohne dass dies für den Fahrer oder einen anderen Verkehrsteilnehmer ersichtlich oder störend ist. Dadurch kann die Funktionsfähigkeit eines Scheinwerfers des Kraftfahrzeugs 10 und seiner Scheinwerfers 12 während der gesamten Benutzung überwacht werden.

Wird bei der Prüfung ein vom Referenzmuster abweichender Teilbereich, wie beispielsweise der Teilbereich 32 oder 34, durch die optische Erfassungseinrichtung 24 detektiert, so kann bei einer weiteren Prüfung das Testmuster 26 und/oder 30 für eine Zeitdauer eingestellt werden, welche abhängig von dem Ergebnis dieser vorherigen Prüfung ist. Beispielsweise wird bei einer detektierten Fehlfunktion ein besonders komplexes Testmuster für eine besonders lange Zeitdauer auf die Fläche 20 abgestrahlt. So kann die vorherige Prüfung besonders gut plausibilisiert werden. Ebenfalls ist es so möglich, die Abweichung bei dem Vergleich nochmals besonders genau zu prüfen und insbesondere einen Ort einer Beschädigung des Konverters 16 zu bestimmen. Hierbei ist es nicht einmal von Nachteil, wenn dieses besonders komplexe Testmuster dann für den Fahrer des Kraftfahrzeugs 10 wahrnehmbar ist, da ihm hiermit dann gleichzeitig eine Fehlermeldung ausgegeben werden kann.

Besonders sinnvoll ist es, wenn eine Beschaffenheit der Fläche 20 mittels der Erfassungseinrichtung 24 und/oder einer weiteren Sensoreinrichtung 36 erfasst wird und das Testmuster 26, 30 in Abhängigkeit von dieser Beschaffenheit mit dem Referenzmuster verglichen wird. Dadurch können externe Einflüsse auf das Ergebnis der Prüfung wie eine Reflexion der Lichtverteilung 18 durch beispielsweise eine feuchte Fahrbahn und/oder eine Verzerrung des Testmusters 26, 30 durch beispielsweise eine unebene Fahrbahn oder Gegenstände auf der Straße verhindert werden. Dadurch ist das Verfahren zum Prüfen der Funktionsfähigkeit des Kraftfahrzeugs 10 besonders robust.

Umfasst die optische Erfassungseinrichtung 24 eine Kamera, kann insbesondere das Spektrum der Wellenlänge des Lichts erfasst werden, welches auch durch das menschliche Auge erfasst wird. Mit einer eine Infrarotkamera umfassenden optischen Erfassungseinrichtung 24 können andere Spektralbereiche bzw. Wellenlängenbereiche des Lichts erfasst werden, um insbesondere Alterungserscheinungen frühzeitig zu erfassen. Die weitere Sensoreinrichtung 36 kann beispielsweise ein Radar oder einen Ultraschallsensor umfassen. Mittels solch einer weiteren Sensoreinrichtung 36 kann besonders gut die Beschaffenheit der Fläche 20 erfasst werden, insbesondere deren Geometrie. Solch eine weitere Sensoreinrichtung 36 ist insbesondere bereits bei Kraftfahrzeugen mit Fahrerassistenzsystemen häufig verbaut. Entsprechend kann die weitere Sensoreinrichtung 36 mit nur geringen oder gar keinen zusätzlichen Kosten für das Verfahren genutzt werden.

Zusätzlich kann der Vergleich des Testmusters 26, 30 mit dem Referenzmuster für eine Kalibrierung des Scheinwerfers 12 genutzt werden. Insbesondere kann die Lichtverteilung 18 durch die Steuereinrichtung 22 so eingestellt werden, dass das Testmuster 26, 30 besonders wenig von dem Referenzmuster abweicht. Dadurch können Beschädigungen des Konverters 16 wenigstens teilweise kompensiert werden. Insbesondere ist es beispielsweise möglich, den beschädigten Teilbereich des Konverters 16, welcher durch das Verfahren zum Prüfen der Funktionsfähigkeit lokalisiert wurde, nicht mehr mit dem Laser 14 zum Leuchten anzuregen und/oder nicht mehr das durch diesen Bereich abgegebene Licht aus dem Scheinwerfer 12 zum Erzeugen der Lichtverteilung 18 abzustrahlen.

Weiterhin ist es möglich, Schwellenwerte bei bestimmten Eigenschaften der Lichtverteilung 18 vorzusehen, ab welchen erst eine Fehlermeldung von der Auswerteeinrichtung 28 ausgegeben wird. Ist die Abweichung unterhalb dieses Schwellenwertes, liegt das Ergebnis der Prüfung beispielsweise unter einem Konfidenzniveau und es kann nicht mit Sicherheit eine Aussage darüber getroffen werden, ob eine Fehlfunktion vorliegt oder nicht.

Durch das erfindungsgemäße Verfahren nach Anspruch 1 kann durch das Erzeugen von einem Testmuster 26, 30 in Form eines Testbilds der Zustand des lumineszierenden, insbesondere fluoreszierenden Konverters 16 sehr genau analysiert werden. Das Testmuster 26, 30 auf der Straße, welches sich durch die Erzeugung des Testbilds ergibt, ist abhängig vom Zustand des Konverters 16. Ist dieser beschädigt, wird das Testmuster 26, 30 von einem Referenzmuster abweichen. Überschreitet die Abweichung einen definierten Schwellenwert, können der Scheinwerfer 12 und/oder der Laser 14 abgeschaltet werden und eine Fehlermeldung ausgegeben werden. Dabei kann auf eine bereits für das Kraftfahrzeug 10 vorgesehene Erfassungseinrichtung 24 zurückgegriffen werden. Neben der Überwachung kann der Scheinwerfer 12 auch durch die Testmuster 26, 30 kalibriert werden. Für die Umsetzung ist eine optische Erfassungseinrichtung 24 mit einer Auflösung zu wählen, welche der zeilenweise aufgebauten Lichtverteilung 18 entsprich. So können alle Fehler in dem Testmuster 26, 30 erfasst werden und diese zudem besonders gut einem Teilbereich des Konverters 16 zugeordnet werden.

Das Testmuster 26, 30 sollte bei einem Fahrbetrieb des Kraftfahrzeugs 10 so schnell aufgebaut werden, dass dies nicht durch das menschliche Auge erkannt wird. Alternativ oder zusätzlich ist es auch möglich, bei einem Start des Kraftfahrzeugs 10 eine sehr ausführliche Prüfung durchzuführen. Diese ausführlichePrüfung kann auch vorgenommen werden, wenn bereits bei einer vorherigen Prüfung ein potentieller Fehler detektiert wurde.

Wird eine optische Erfassungseinrichtung 24 eingesetzt, welche nicht nur Graustufenwerte erkennen kann, sondern auch die Farbe der Lichtverteilung 18 analysiert, können potentielle Fehlerquellen besonders genau analysiert werden. Gerade die Farbe des von dem Scheinwerfer 12 abgestrahlten Lichts kann sich bei einer Beschädigung des Konverters 16 verändern. Gegebenenfalls kann die Prüfung nur unter bestimmten Randbedingungen erfolgen wie beispielsweise auf Landstraßen ohne Gegenverkehr.

Insgesamt wird durch das Beispiel gezeigt, wie durch die Erfindung eine Fehlererkennung dynamischer Scheinwerfersysteme geschaffen wird.

## Patentansprüche

1. Verfahren zum Prüfen der Funktionsfähigkeit eines Scheinwerfers eines Kraftfahrzeugs (10), bei welchem der Scheinwerfer (12) mittels eines Lasers (14) Licht erzeugt, mittels welchem ein Konverter (16) zum Abgeben von konvertiertem Licht angeregt wird, welches vom Scheinwerfer (12) zum Erzeugen einer vorgebbaren Lichtverteilung (18) auf einer Fläche (20) in einem Umgebungsbereich des Kraftfahrzeugs (10) abgestrahlt wird, wobei die vorgebbare Lichtverteilung (18) durch eine Steuereinrichtung (22) des Scheinwerfers (12) eingestellt wird,
umfassend die folgenden Schritte:
- durch die Steuereinrichtung (22) wird als Lichtverteilung (18) ein Testmuster (26, 30) eingestellt;
- mittels einer optischen Erfassungseinrichtung (24) des Kraftfahrzeugs (10) wird das Testmuster (26, 30) auf der Fläche (20) erfasst;
- durch eine Auswerteinrichtung (28) des Kraftfahrzeugs (10) wird das erfasste Testmuster (26, 30) mit wenigstens einem vorbestimmten Referenzmuster verglichen,
**dadurch gekennzeichnet, dass**
das Referenzmuster ein durch einen unbeschädigten oder beschädigten Scheinwerfer (12) erzeugtes Testmuster (26, 30) nachbildet und dass mittels der Auswerteinrichtung (28) das Testmuster (26, 30) mit dem Referenzmuster anhand wenigstens einer der folgenden Eigenschaften verglichen wird, um eine Alterung und/oder einen Riss des Konverters (16) zu erfassen: einer Helligkeit, einer Farbe.

2. Verfahren nach Anspruch 1,
**dadurch gekennzeichnet, dass**
in Abhängigkeit von einer Lage eines veränderten Teilbereichs (32, 34) der Lichtverteilung (18) eine Position einer Beschädigung des Konverters bestimmt wird.

3. Verfahren nach einem der Ansprüche 1 oder 2,
**dadurch gekennzeichnet, dass**
mittels der Auswerteinrichtung (28) das Testmuster (26, 30) mit dem Referenzmuster anhand wenigstens einer der folgenden Eigenschaften verglichen wird: einer Hell-Dunkel-Grenze, einer Lage, einer Form.

4. Verfahren nach einem der vorherigen Ansprüche,
**dadurch gekennzeichnet, dass**
von dem Kraftfahrzeug (10) das Referenzmuster selbst erzeugt wird, indem eine weitere Lichtverteilung (18) eingestellt, erfasst und als das Referenzmuster gespeichert wird.

5. Verfahren nach einem der vorherigen Ansprüche,
**dadurch gekennzeichnet, dass**
das Testmuster (26, 30) für eine vorbestimmte Zeitdauer eingestellt wird, welche kleiner oder gleich einer 1/20 Sekunde ist.

6. Verfahren nach einem der vorherigen Ansprüche,
**dadurch gekennzeichnet, dass**
das Testmuster (26, 30) für eine Zeitdauer eingestellt wird, welche abhängig von einem Vergleichsergebnis eines vorherigen Vergleichs eines erfassten Testmusters (26, 30) mit einem Referenzmuster ist.

7. Verfahren nach einem der vorherigen Ansprüche,
**dadurch gekennzeichnet, dass**
eine Beschaffenheit der durch die Lichtverteilung (18) beleuchteten Fläche (20) mittels der Erfassungseinrichtung (24) und/oder einer weiteren Sensoreinrichtung (36) erkannt wird und das Testmuster (26, 30) in Abhängigkeit von dieser erkannten Beschaffenheit mit dem Referenzmuster verglichen wird.

8. Verfahren nach Anspruch 7,
**dadurch gekennzeichnet, dass**
die Beschaffenheit der durch die Lichtverteilung (18) beleuchteten Fläche (20) eine Geometrie und/oder Reflexionseigenschaft der Fläche (20) ist.

9. Verfahren nach einem der vorherigen Ansprüche,
**dadurch gekennzeichnet, dass**
der Scheinwerfer (12) in Abhängigkeit von einem Ergebnis des Vergleichs des Testmusters (26, 30) mit dem Referenzmuster kalibriert wird.

10. Verfahren nach einem der vorherigen Ansprüche,
**dadurch gekennzeichnet, dass**
von der Auswerteinrichtung (28) eine Fehlermeldung ausgegeben wird, wenn das Testmuster (26, 30) von dem Referenzmuster um einen vorbestimmten Schwellenwert bei dem Vergleich abweicht.

11. Kraftfahrzeug (10), mit einer optischen Erfassungseinrichtung (24) und mit einem Scheinwerfer (12), welcher einen Laser (14) umfasst, welcher dazu ausgebildet ist, Licht zu erzeugen, mittels welchem ein Konverter (16) anregbar ist, welcher dazu geeignet ist, bei Anregung konvertiertes Licht abzugeben, welches vom Scheinwerfer (12) zum Erzeugen einer vorgebbaren Lichtverteilung (18) auf einer Fläche (20) in einem Umgebungsbereich des Kraftfahrzeugs (10) abstrahlbar ist, wobei die vorgebbare Lichtverteilung (18) durch eine Steuereinrichtung (22) des Scheinwerfers (12) einstellbar ist,
**dadurch gekennzeichnet, dass**
das Kraftfahrzeug (10) dazu ausgebildet ist, ein Verfahren nach einem der Ansprüche 1 bis 9 durchzuführen.

12. Kraftfahrzeug (10) nach Anspruch 11,
**dadurch gekennzeichnet, dass**
die optische Erfassungseinrichtung (24) eine Kamera und/oder einen Infrarotkamera umfasst.

## Claims

1. Method for checking the functionality of a headlamp of a motor vehicle (10), in which the headlamp (12) generates light by means of a laser (14), by means of which a converter (16) is stimulated for the emission of converted light, which is radiated from the headlamp (12) for the generation of a predeterminable light distribution (18) on a surface (20) in a surrounding area of the motor vehicle (10), wherein the predeterminable light distribution (18) is set by a control device (22) of the headlamp (12),
comprising the following steps:
- via the control device (22) a test pattern (26, 30) is set as a light distribution (18);
- by means of an optical detection device (24) of the motor vehicle (10), the test pattern (26, 30) is detected on the surface (20);
- via an evaluation device (28) of the motor-vehicle (10), the detected test pattern (26, 30) is compared with at least one predetermined reference pattern,
**characterised in that**
the reference pattern reproduces a test pattern (26, 30) generated by an undamaged or damaged headlamp (12) and that by means of the evaluation device (28) the test pattern (26, 30) is compared with the reference pattern using at least one of the following characteristics, in order to detect an ageing and/or a tear in the converter (16): a brightness, a colour.

2. Method according to claim 1,
**characterised in that**
depending on a position of an altered partial region (32, 34) of the light distribution (18) a position of a damage to the converter is determined.

3. Method according to any of claims 1 or 2,
**characterised in that**
by means of the evaluation device (28) the test pattern (26, 30) is compared with the reference pattern using at least one of the following characteristics: a light-dark boundary, a position, a shape.

4. Method according to any of the preceding claims,
**characterised in that**
the reference pattern itself is generated by the motor-vehicle (10), **in that** a further light distribution (18) is set, detected and stored as the reference pattern.

5. Method according to any of the preceding claims,
**characterised in that**
the test pattern (26, 30) is set for a predetermined time duration, which is smaller than or equal to 1/20 of a second.

6. Method according to any of the preceding claims,
**characterised in that**
the test pattern (26, 30) is set for a time duration which is dependent on a comparison result of a previous comparison of a detected test pattern (26, 30) with a reference pattern.

7. Method according to any of the preceding claims,
**characterised in that**
a quality of the surface (20) illuminated by means of the light distribution (18) is recognised by means of the detection device (24) and/or a further sensor device (36) and the test pattern (26, 30) is compared with the reference pattern depending on this detected quality.

8. Method according to claim 7,
**characterised in that**
the quality of the surface (20) illuminated by means of the light distribution (18) is a geometry and/or reflection characteristic of the surface (20).

9. Method according to any of the preceding claims,
**characterised in that**
the headlamp (12) is calibrated depending on a result of the comparison of the test pattern (26, 30) with the reference pattern.

10. Method according to any of the preceding claims,
**characterised in that**
an error message is outputted by the evaluation device (28) when the test pattern (26, 30) deviates in the comparison from the reference pattern by a predetermined threshold value.

11. Motor vehicle (10), having an optical detection device (24) and having a headlamp (12) which comprises a laser (14) which is configured to generate light by means of which a converter (16) can be stimulated which is suitable under stimulation to emit converted light which can be radiated from the headlamp (12) for generating a predeterminable light distribution (18) on a surface (20) in a surrounding area of the motor-vehicle (10), wherein the predeterminable light distribution (18) can be set by a control device (22) of the headlamp (12),
**characterised in that**
the motor-vehicle (10) is configured to carry out a method according to any of claims 1 to 9.

12. Motor vehicle (10) according to claim 11,
**characterised in that**
the optical detection device (24) comprises a camera and/or an infrared camera.

## Revendications

1. Procédé de vérification de la capacité à fonctionner d'un projecteur d'un véhicule automobile (10), dans lequel le projecteur (12) produit au moyen d'un laser (14) une lumière au moyen de laquelle un convertisseur (16) est excité afin de fournir une lumière convertie qui est émise par le projecteur (12) dans le but de produire une diffusion de lumière (18), pouvant être prescrite, sur une surface (20) dans une zone environnante du véhicule automobile (10), dans lequel la diffusion de lumière (18) pouvant être prescrite est réglée par un dispositif de commande (22) du projecteur (12), comprenant les étapes suivantes :
- un motif de test (26, 30) est réglé comme diffusion de lumière (18) par le dispositif de commande (22) ;
- le motif de test (26, 30) est détecté sur la surface (20) au moyen d'un dispositif de détection optique (24) du véhicule automobile (10) ;
- le motif de test (26, 30) détecté est comparé à au moins un motif de référence prédéterminé par un dispositif d'évaluation (28) du véhicule automobile (10) ;
**caractérisé en ce que**
le motif de référence reproduit un motif de test (26, 30) produit par un projecteur (12) non endommagé ou endommagé et **en ce que**, au moyen du dispositif d'évaluation (28), le motif de test (26, 30) est comparé au motif de référence à l'aide d'au moins l'une des propriétés suivantes afin de détecter un vieillissement et/ou une fissure du convertisseur (16) : une luminosité, une couleur.

2. Procédé selon la revendication 1,
**caractérisé en ce que**
une position d'un endommagement du convertisseur est déterminée en fonction d'une position d'une zone partielle modifiée (32, 34) de la diffusion de lumière (18).

3. Procédé selon l'une quelconque des revendications 1 ou 2,
**caractérisé en ce que**
au moyen du dispositif d'évaluation (28), le motif de test (26, 30) est comparé au motif de référence à l'aide d'au moins l'une des propriétés suivantes : une limite clair-sombre, une position, une forme.

4. Procédé selon l'une quelconque des revendications précédentes,
**caractérisé en ce que**
le motif de référence est lui-même produit par le véhicule automobile (10) du fait qu'une autre diffusion de lumière (18) est réglée, détectée et mémorisée comme motif de référence.

5. Procédé selon l'une quelconque des revendications précédentes,
**caractérisé en ce que**
le motif de test (26, 30) est réglé pour une durée prédéterminée qui est inférieure ou égale à 1/20 seconde.

6. Procédé selon l'une quelconque des revendications précédentes,
**caractérisé en ce que**
le motif de test (26, 30) est réglé pour une durée qui dépend d'un résultat de comparaison d'une comparaison antérieure entre un motif de test (26, 30) détecté et un motif de référence.

7. Procédé selon l'une quelconque des revendications précédentes,
**caractérisé en ce que**
une caractéristique de la surface (20) éclairée par la diffusion de lumière (18) est détectée au moyen du dispositif de détection (24) et/ou d'un autre dispositif capteur (36) et le motif de test (26, 30) est comparé au motif de référence en fonction de cette caractéristique détectée.

8. Procédé selon la revendication 7,
**caractérisé en ce que**
la caractéristique de la surface (20) éclairée par la diffusion de lumière (18) est une géométrie et/ou une propriété de réflexion de la surface (20).

9. Procédé selon l'une quelconque des revendications précédentes,
**caractérisé en ce que**
le projecteur (12) est calibré en fonction d'un résultat de la comparaison entre le motif de test (26, 30) et le motif de référence.

10. Procédé selon l'une quelconque des revendications précédentes,
**caractérisé en ce que**
un message d'erreur est délivré par le dispositif d'évaluation (28) lorsque, lors de la comparaison, le motif de test (26, 30) s'écarte du motif de référence d'une valeur de seuil prédéterminée.

11. Véhicule automobile (10), avec un dispositif de détection optique (24) et avec un projecteur (12) qui comprend un laser (14) qui est conçu pour produire une lumière au moyen de laquelle peut être excité un convertisseur (16) qui permet de fournir une lumière convertie lors de l'excitation qui peut être émise par le projecteur (12) afin de produire une diffusion de lumière (18) pouvant être prescrite sur une surface (20) dans une zone environnante du véhicule automobile (10), laquelle diffusion de lumière (18) pouvant être prescrite peut être réglée par un dispositif de commande (22) du projecteur (12),
**caractérisé en ce que**
le véhicule automobile (10) est conçu pour mettre en oeuvre un procédé selon l'une quelconque des revendications 1 à 9.

12. Véhicule automobile (10) selon la revendication 11,
**caractérisé en ce que**
le dispositif de détection optique (24) comprend une caméra et/ou une caméra infrarouge.
